(19) Europäisches Patentamt
European Patent Office
Office européen des brevets

(11) **EP 3 503 490 A1**

(12) **EUROPEAN PATENT APPLICATION**
published in accordance with Art. 153(4) EPC

(43) Date of publication:
**26.06.2019 Bulletin 2019/26**

(51) Int Cl.:
**H04L 29/02** (2006.01)     **G01S 13/02** (2006.01)

(21) Application number: **16917129.5**

(86) International application number:
**PCT/CN2016/100596**

(22) Date of filing: **28.09.2016**

(87) International publication number:
**WO 2018/058374 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang**
**Shenzhen, Guangdong 518129 (CN)**

(72) Inventors:
• **LIU, Ju**
  **Shenzhen**
  **Guangdong 518129 (CN)**
• **CHU, Dongyu**
  **Shenzhen**
  **Guangdong 518129 (CN)**
• **ZHU, Changqing**
  **Shenzhen**
  **Guangdong 518129 (CN)**
• **YE, Wei**
  **Shenzhen**
  **Guangdong 518129 (CN)**
• **ZHAO, Yueying**
  **Shenzhen**
  **Guangdong 518129 (CN)**
• **ZHANG, Jian**
  **Shenzhen**
  **Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **ENVIRONMENT SENSING METHOD AND BASE STATION**

(57)     Embodiments of the present invention relate to an environment perception method and a base station. The method includes: sending, by a base station, an electromagnetic perception signal to a to-be-perceived region; receiving electromagnetic feedback signals transmitted, scattered, and reflected from an ambient environment of the to-be-perceived region and an object in the to-be-perceived region; and calculating environment information of the to-be-perceived region based on the electromagnetic feedback signals and the electromagnetic perception signal. In this way, environment information of a coverage area of the base station can be determined. In addition, environment information update frequency may be dynamically adjusted by setting a detection period for sending an electromagnetic perception signal, so as to meet environment information detection requirements of different applications, for example, real-time detection on environment information and high resolution detection on environment information.

FIG. 7

**Description**

**TECHNICAL FIELD**

Embodiments of the present invention relate to the field of wireless communications technologies, and in particular, to an environment perception method and a base station.

**BACKGROUND**

Wireless communication is a manner of long-range communication by using an electromagnetic signal. Environment perception plays a very important role in algorithm decision and the like in terms of resource allocation, interference prediction, handover, and the like in wireless communication.

The environment perception is determining environment information such as a ground object and a geomorphic feature in a coverage area of a base station, and calculating a propagation path, penetration, attenuation, and other information of a radio wave, for example, level and signal-to-noise ratio (Signal Noise Ratio, SNR) distribution, based on the environment information obtained through the environment perception.

In the prior art, a three-dimensional electronic map usually needs to be used as input to environment perception in processes such as wireless network planning and optimization, and wireless algorithm simulation. The three-dimensional electronic map includes three-dimensional information such as a ground object and a geomorphic feature, and is used to calculate a propagation path and a propagation path loss of a radio wave.

The electronic map is drawn in a conventional mapping manner, and this is time- and energy-consuming. In addition, the electronic map has a relatively low resolution (usually the resolution is approximately 5 m) and a long update cycle. Consequently, precision and accuracy of the environment perception are affected.

**SUMMARY**

Embodiments of the present invention provide an environment perception method and a base station, so that the base station can obtain ambient environment information of the base station through electromagnetic perception, thereby improving accuracy of the environment information.

According to a first aspect, an embodiment of the present invention provides an environment perception method, including: sending, by a base station, an electromagnetic perception signal to a to-be-perceived region, where the electromagnetic perception signal is sent by using any one or a combination of a time domain resource, a frequency domain resource, and a space domain resource; receiving, by the base station, an electromagnetic feedback signal fed back by a detected object in the to-be-perceived region; and determining, by the base station, environment information of the to-be-perceived region based on the electromagnetic perception signal and the electromagnetic feedback signal. In this embodiment of the present invention, the base station sends the electromagnetic perception signal to the to-be-perceived region, receives electromagnetic feedback signals transmitted, scattered, and reflected from an ambient environment of the to-be-perceived region and an object in the to-be-perceived region, and calculates the environment information of the to-be-perceived region based on the electromagnetic feedback signals and the electromagnetic perception signal that is sent by the base station. In this way, environment information of a coverage area of the base station can be determined. In addition, environment information update frequency may be dynamically adjusted by setting a detection period for sending an electromagnetic perception signal, so as to meet environment information detection requirements of different applications, for example, real-time detection on environment information and high resolution detection on environment information.

In a possible implementation, the electromagnetic perception signal is sent by a communications transmitter of the base station by using a time-frequency blank resource of a communications system, for example, a blank symbol and a blank subframe, or a non-blank resource; or the electromagnetic perception signal may be sent by using an exclusively defined waveform or exclusively defined data; or the electromagnetic perception signal is sent by reusing a mobile communication waveform or mobile communication data. That the electromagnetic perception signal is sent by using a space domain resource includes: the electromagnetic perception signal is sent by using a plurality of beams in space, where the plurality of beams may include a wide beam and a narrow beam, and the beams may be dedicated beams or reused communication beams, including a common beam (for example, a broadcast beam), a dedicated beam (for example, a communication beam oriented towards a specific user), or an electromagnetic perception dedicated beam oriented towards a specific to-be-detected region. An electromagnetic perception signal is sent for a plurality of times within a preset period, where the plurality of times of sending an electromagnetic perception signal are corresponding to different to-be-perceived regions, or the plurality of times of sending an electromagnetic perception signal are corresponding to a same to-be-perceived region. In this embodiment of the present invention, environment perception of the base station may be implemented by reusing communication resources of the base station, including a time domain resource, a frequency domain resource, a space domain resource, a transmitter, a receiver, and the like. This reduces deployment costs of an environment perception device, and reduces resources.

In another possible implementation, the determining, by the base station, environment information of the to-be-perceived region based on the electromagnetic perception signal and the electromagnetic feedback signal includes: performing, by the base station, imaging on the to-be-perceived region based on the electromagnetic perception signal and the electromagnetic feedback signal, and calculating one or more of the following environment information: a distance between the detected object in the to-be-perceived region and the base station, a shape of the detected object, a speed of the detected object, a material of the detected object, a motion feature of the detected object, a Doppler shift feature of the electromagnetic feedback signal, and the like. In this embodiment of the present invention, a plurality of types of environment information may be calculated, to provide data support for a self-organizing network (Self-Organizing Network, SON), radio resource management (Radio Resource Management, RRM), wireless network planning and optimization, mobile object monitoring, building deformation monitoring, weather monitoring, and the like. In addition, the environment information is more accurate, and an update cycle is shorter.

In still another possible implementation, the determining, by the base station, environment information of the to-be-perceived region based on the electromagnetic perception signal and the electromagnetic feedback signal further includes: calculating a level or a signal-to-noise ratio SNR of a position of the detected object in the to-be-perceived region, and determining level or SNR distribution corresponding to the to-be-perceived region; determining level or SNR distribution of a coverage area of the base station based on level or SNR distribution of one or more to-be-perceived regions in the coverage area of the base station; and using the level or SNR distribution of the coverage area of the base station for an SON or RRM. In this embodiment of the present invention, data support can be provided for the SON and the RRM based on the level or SNR distribution of the to-be-perceived region in the coverage area of the base station, so that the SON and the RRM are more proper, and user experience is better.

In yet another possible implementation, the method further includes: determining, based on the Doppler shift feature of the electromagnetic feedback signal, whether the detected object in the to-be-perceived region is an unmanned aerial vehicle. It may be determined, based on a Doppler shift feature triggered by a rotor wing, whether the object is an unmanned aerial vehicle and whether there is one or more unmanned aerial vehicles in the to-be-perceived region. In this embodiment of the present invention, the unmanned aerial vehicle may be managed and controlled, including prohibited area control and unmanned aerial vehicle capture. In addition, the data may also be used for unmanned aerial vehicle navigation, unmanned driving assistance, and the like.

In yet another possible implementation, the method further includes: modifying a 3D electronic map of the to-be-perceived region based on the environment information of the to-be-perceived region, or adding material information in the to-be-perceived region. In this embodiment of the present invention, a more specific 3D electronic map may be provided, so that finer network planning and optimization are implemented based on the 3D electronic map, and impact on electromagnetic wave transmission that is caused by a material can be reflected based on material information, to obtain more accurate electromagnetic transmission feature information such as a coverage capability.

According to a second aspect, an embodiment of the present invention provides a base station, including: an electromagnetic perception transmitting unit, configured to send an electromagnetic perception signal to a to-be-perceived region, where the electromagnetic perception signal is sent by using any one or a combination of a time domain resource, a frequency domain resource, and a space domain resource; an electromagnetic perception receiving unit, configured to receive an electromagnetic feedback signal that is greater than a threshold and that is fed back by a detected object in the to-be-perceived region; and a data processing unit, configured to determine environment information of the to-be-perceived region based on the electromagnetic perception signal and the electromagnetic feedback signal.

In a possible implementation, a communications transmitting unit of the base station is reused as the electromagnetic perception transmitting unit.

In another possible implementation, a communications receiving unit of the base station is reused as the electromagnetic perception receiving unit.

In still another possible implementation, the electromagnetic perception transmitting unit is connected to the electromagnetic perception receiving unit by using a physical interface.

In yet another possible implementation, the data processing unit is further configured to: perform imaging on the to-be-perceived region based on the electromagnetic perception signal and the electromagnetic feedback signal, and calculate one or more of the following environment information: a distance between the detected object in the to-be-perceived region and the base station, a shape of the detected object, a speed of the detected object, a material of the detected object, a motion feature of the detected object, a Doppler shift feature of the to-be-perceived region, and the like.

In yet another possible implementation, the data processing unit is further configured to: calculate a level or a signal-to-noise ratio SNR of a position of the detected object in the to-be-perceived region, and determine level or SNR distribution corresponding to the to-be-perceived region; determine level or SNR distribution of a coverage area of the base station based on level or SNR distribution of one or more to-be-perceived regions in the coverage area of the base station; and use the level or SNR distribution of the coverage area of the base station for a self-organizing network SON or RRM.

In yet another possible implementation, the data processing unit is further configured to determine, based on the Doppler shift feature of the electromagnetic feedback signal, whether the detected object in the to-be-perceived region is an unmanned aerial vehicle.

In yet another possible implementation, the data processing unit is further configured to: modify a 3D electronic map of the to-be-perceived region based on the environment information of the to-be-perceived region, or add material information of the detected object in the to-be-perceived region.

According to a third aspect, the present invention provides an environment perception apparatus, and the apparatus includes:

> a sending module, configured to send an electromagnetic perception signal to a to-be-perceived region, where the electromagnetic perception signal is sent by using any one or a combination of a time domain resource, a frequency domain resource, and a space domain resource;
> a receiving module, configured to receive an electromagnetic feedback signal of a detected object in the to-be-perceived region; and
> a processing module, configured to determine, by the base station, environment information of the to-be-perceived region based on the electromagnetic perception signal and the electromagnetic feedback signal.

In an optional implementation, that the electromagnetic perception signal is sent by using any one or a combination of a time domain resource, a frequency domain resource, and a space domain resource includes one or a combination of the following manners:

> the electromagnetic perception signal is sent by using a time-frequency blank resource of a communications system or reusing a non-blank resource; or
> the electromagnetic perception signal is sent by using a dedicated waveform or reusing a communication waveform; or
> the electromagnetic perception signal is sent by using dedicated data or reusing communication data; or
> the electromagnetic perception signal is sent by using a dedicated beam or reusing a communication beam.

In another optional implementation, that the electromagnetic perception signal is sent by using any one or a combination of a time domain resource, a frequency domain resource, and a space domain resource includes one or a combination of the following manners:

> one or more electromagnetic perception signals are separately sent by using a plurality of beams in space, where the plurality of beams include a wide beam and/or a narrow beam; or
> one or more electromagnetic perception signals are sent for a plurality of times within a preset period, where the plurality of times of sending one or more electromagnetic perception signals are corresponding to different to-be-perceived regions, or the plurality of times of sending one or more electromagnetic perception signals are corresponding to a same to-be-perceived region.

In still another optional implementation, the processing module is further configured to: perform imaging on the to-be-perceived region based on the electromagnetic perception signal and the electromagnetic feedback signal, and calculate one or more of the following environment information:
a distance between the detected object in the to-be-perceived region and the base station, a shape of the detected object, a speed of the detected object, a material of the detected object, a motion feature of the detected object, and a Doppler shift feature of the electromagnetic feedback signal.

In yet another optional implementation, the processing module is further configured to: calculate a level or a signal-to-noise ratio SNR of a position of the detected object in the to-be-perceived region, and determine level or SNR distribution corresponding to the to-be-perceived region; and
determine level or SNR distribution of a coverage area of the base station based on level or SNR distribution of one or more to-be-perceived regions in the coverage area of the base station.

In yet another optional implementation, the processing module is further configured to use the level or SNR distribution of the coverage area of the base station for a self-organizing network SON or radio resource management RRM.

In yet another optional implementation, the processing module is further configured to determine, based on the Doppler shift feature of the electromagnetic feedback signal, whether the detected object in the to-be-perceived region is an unmanned aerial vehicle.

In yet another optional implementation, the processing module is further configured to: modify a 3D electronic map of the to-be-perceived region based on the environment information of the to-be-perceived region, or add material information of the detected object in the to-be-perceived region.

According to a fourth aspect, an embodiment of the present invention provides a storage medium for storing a computer software instruction used for the foregoing electronic device. A computer runs the instruction to perform the following operations: sending an electromagnetic perception signal to a to-be-perceived region, where the electromagnetic perception signal is sent by using any one or a combination of a time domain resource, a frequency domain resource, and a space domain resource; receiving an electromagnetic feedback signal of a detected object in the to-be-perceived region; and determining environment information of the to-be-perceived region based on the electromagnetic perception signal and the electromagnetic feedback signal.

## BRIEF DESCRIPTION OF DRAWINGS

FIG. 1 is a schematic diagram of an application scenario;
FIG. 2 shows an example of an application scenario;
FIG. 3 is a schematic structural diagram of a base station according to an embodiment of the present invention;
FIG. 4 is a schematic diagram of base station deployment according to an embodiment of the present invention;
FIG. 5 is a schematic structural diagram of another base station according to an embodiment of the present invention;
FIG. 6 is another schematic diagram of base station deployment according to an embodiment of the present invention;
FIG. 7 is a flowchart of an environment perception method according to an embodiment of the present invention;
FIG. 8 shows an example according to an embodiment of the present invention;
FIG. 9 shows another example according to an embodiment of the present invention; and
FIG. 10 is a schematic structural diagram of an environment perception apparatus according to an embodiment of the present invention.

## DESCRIPTION OF EMBODIMENTS

To provide thorough understanding of the embodiments of the present invention, the following further describes specific embodiments in detail with reference to the accompanying drawings. The embodiments are not intended to limit the embodiments of the present invention.

It should be noted that a base station in the present invention is mainly a device with a wireless transceiver function, for example, a macro base station, a small cell, and a terminal such as user equipment or an in-vehicle device.

An electromagnetic perception signal is an electromagnetic wave that is sent by the base station and that is used to perceive environment information. A resource of a communications system of the base station, for example, any one or a combination of a time domain resource, a frequency domain resource, and a space domain resource of the communications system, may be used for the electromagnetic wave.

A detected object is any physical object on the ground, and the physical object can feed back an electromagnetic wave. For example, the detected object includes a ground object such as a mountain, a forest, or a building, or may include a mobile object such as a car or an unmanned aerial vehicle. The detected object may also be referred to as a target.

A to-be-perceived region is a region in which the detected object is located. The to-be-perceived region may be a beam coverage area of the electromagnetic perception signal, and the to-be-perceived region may include one or more detected objects. A coverage area of the base station may include one or more detected objects, and correspondingly, the coverage area of the base station may include one or more to-be-perceived regions.

An electromagnetic feedback signal is an electromagnetic wave fed back by the detected object, and electromagnetic feedback signals are transmitted, scattered, reflected, and the like after the electromagnetic perception signal reaches the detected object.

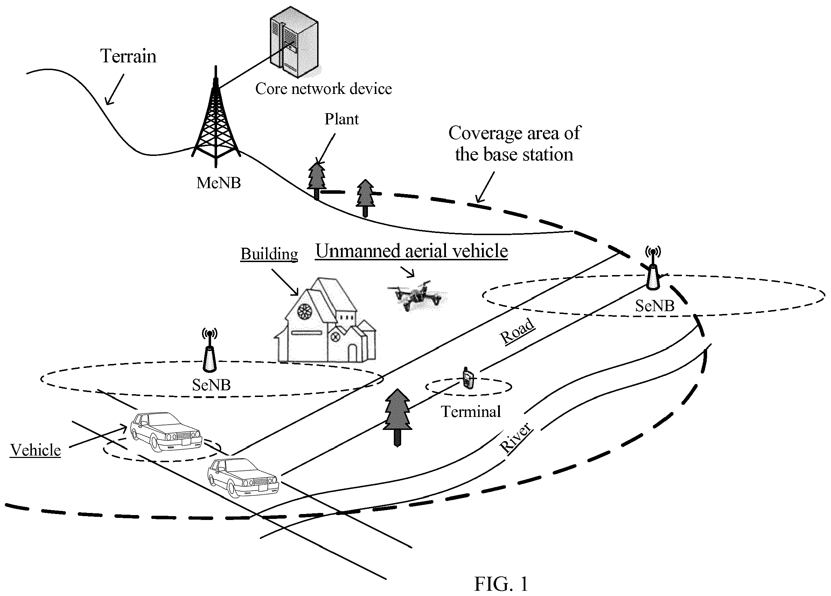

An environment perception method, a base station, and a system provided in the present invention are applicable to a scenario shown in FIG. 1. FIG. 1 shows a macro base station and an environment in a coverage area of the macro base station. The macro base station is a device on an access network side, and after establishing a wireless connection to the macro base station, terminals such as user equipment, an in-vehicle device, and an unmanned aerial vehicle may access the Internet or implement a connection to the macro base station. In other words, the terminal is located in the signal coverage area of the macro base station, and the macro base station sends an electromagnetic signal to the terminal and receives an electromagnetic signal sent by the terminal, to implement communication. The macro base station is usually connected to a core network device in a wired manner, for example, by using an optical fiber or a cable.

Small cells such as an indoor small cell or an outdoor small cell are mainly used to increase a coverage area and a throughput of the macro base station and improve service quality. The indoor/outdoor small cell may obtain backhaul signals in a wired manner, or obtains a wireless backhaul by accessing the macro base station.

The terminal has a wireless transceiver function, and mainly implements wireless communication with the macro base station or the small cell by using the wireless transceiver function. Wireless communication may also be performed between terminals, for example, terminals supporting D2D (Device to Device, device to device) or M2M (Machine to Machine, machine to machine) communication.

An environment in the coverage area of the base station is very complex. As shown in FIG. 1, the coverage area of the base station includes uneven terrains, plants, buildings, roads, rivers, and the like. Environment information of the coverage area of the base station can provide data support for a self-organizing network (Self-Organizing Network, SON), radio resource management (Radio Resource Management, RRM), wireless network planning and optimization, mobile object monitoring, building deformation monitoring, weather monitoring, and the like. In addition, more accurate environment information with a shorter update cycle can provide better data support.

In the present invention, the base station sends an electromagnetic perception signal to a to-be-perceived region, receives electromagnetic feedback signals transmitted, scattered, and reflected by a detected object in the to-be-perceived region, and calculates environment information of the to-be-perceived region based on the electromagnetic feedback signals and the electromagnetic perception signal, so as to determine the environment information of the coverage area of the base station. In addition, environment information update frequency may be dynamically adjusted by setting a detection period for sending an electromagnetic perception signal, so as to meet environment information detection requirements of different applications, for example, real-time quality and a detection resolution.

In an embodiment, as shown in FIG. 1, there are buildings, roads, and plants between the macro base station and the terminal, and the base station has a height difference from the buildings, the roads, the plants, and the terminal. The macro base station performs wireless environment perception on a cell in the coverage area of the macro base station in real time (for example, perceives trees, vehicles, and people), may determine a level or a signal-to-noise ratio of a position of the terminal based on the environment information of the coverage area of the base station, and may adjust parameters for an SON, RRM, wireless network planning and optimization, cell handover of a terminal device, a cell-level algorithm, and the like based on the level or the signal-to-noise ratio in a communication process between the base station and the terminal, so that user experience is better.

In another embodiment, as shown in FIG. 1, the macro base station may track and control devices such as an unmanned aerial vehicle, a self-driving car, security monitoring, and a robot by detecting the environment information obtained through wireless environment perception.

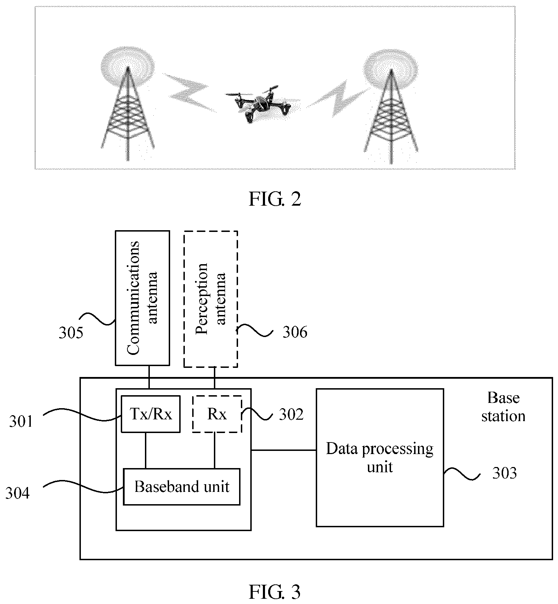

In an example, as shown in FIG. 2, for a rotor unmanned aerial vehicle, it may be determined, based on a Doppler shift feature triggered by a rotor wing, whether the object is an unmanned aerial vehicle and whether there is one or more unmanned aerial vehicles in a to-be-perceived region. In addition to a position and a direction, a motion speed of the detected mobile object may be detected based on a Doppler shift caused by the object. For a rotor unmanned aerial vehicle, it may be determined, based on a Doppler shift feature triggered by a rotor wing, whether the object is an unmanned aerial vehicle and whether there is one or more unmanned aerial vehicles in a to-be-perceived region. If the mobile object continuously passes by a plurality of detection beams, and is separately detected by a plurality of beams, a motion trail of the object may be calculated based on information detected by the plurality of beams.

In still another embodiment, the indoor small cell may identify actions such as a user gesture, monitor health information such as breath, and the like by using the environment information obtained through wireless environment perception.

In yet another embodiment, the environment information obtained through wireless environment perception may be used to implement road condition reminding, emergency handling, and even unmanned driving.

It should be learned that for the purpose of clear and brief description, FIG. 1 shows only some terrains, ground objects, and the like. In an actual application, the environment in the coverage area of the base station may include a more complex or simpler terrain and more or fewer ground objects.

The following further describes the embodiments of the present invention with reference to the accompanying drawings.

An embodiment of the present invention provides a base station, to perceive environment information by using an electromagnetic wave. As shown in FIG. 3, the base station includes an electromagnetic perception transmitting unit 301, an electromagnetic perception receiving unit 302, a data processing unit 303, a baseband unit 304, a communications antenna 305, and a perception antenna 306. A communications transmitting unit of the base station is reused as the electromagnetic perception transmitting unit 301, the electromagnetic perception transmitting unit 301 is connected to the communications antenna 305, and the electromagnetic perception transmitting unit 301 and the communications antenna 305 are used for mobile communication, and are further configured to send an electromagnetic perception signal to a to-be-perceived region. The electromagnetic perception signal is sent by using any one or a combination of a time domain resource, a frequency domain resource, and a space domain resource. Specifically, the baseband unit 304 directly generates an electromagnetic perception digital signal or receives an electromagnetic perception digital signal sent by the data processing unit 303, and performs code modulation on the electromagnetic perception digital signal. An electromagnetic perception digital signal obtained after the code modulation is transmitted to a cell-specific region by the electromagnetic perception transmitting unit 301 by using the communications antenna 305. The electromagnetic perception receiving unit 302 is connected to the perception antenna 306, and the electromagnetic perception receiving unit 302 and the perception antenna 306 are configured to receive an electromagnetic feedback signal that is greater than a threshold and that is fed back by a detected object in the to-be-perceived region. Specifically, the baseband unit 304 receives an electromagnetic perception analog signal transmitted by the electromagnetic perception receiving unit 302, performs demodulation, decoding, and the like on the electromagnetic perception signal, and then sends an electromagnetic perception signal obtained after the processing to the data processing unit 303. The data processing unit 303 is configured to determine environment information of the to-be-perceived region based on the electromagnetic perception signal and the electromagnetic feedback signal.

The data processing unit 303 is further configured to: perform imaging on the to-be-perceived region based on the electromagnetic perception signal sent by the data processing unit 303 and the electromagnetic feedback signal, and calculate one or more of the following: a distance between the detected object in the to-be-perceived region and the base station, a shape of the detected object, a speed of the detected object, a material of the detected object, and a motion feature of the detected object; calculate a level or a signal-to-noise ratio SNR of a position of the detected object in the to-be-perceived region, and determine level or SNR distribution corresponding to the to-be-perceived region; determine level or SNR distribution of a coverage area of the base station based on level or SNR distribution of one or more to-be-perceived regions in the coverage area of the base station; and use the level or SNR distribution of the coverage area of the base station as input data of wireless network planning and optimization, a radio resource management algorithm, and a self-organizing network SON feature or a determining basis of radio resource management RRM.

In an embodiment, as shown in FIG. 3, a transceiver function may be integrated into the electromagnetic perception transmitting unit 301, and the electromagnetic perception transmitting unit 301 into which the transceiver function is integrated and the communications antenna 305 may implement functions of the electromagnetic perception receiving unit 302 and the perception antenna 306 in the foregoing embodiment.

In another embodiment, as shown in FIG. 3, the electromagnetic perception receiving unit 302 and the perception antenna 306 may be implemented by reusing a receiving unit and a communications antenna of mobile communication.

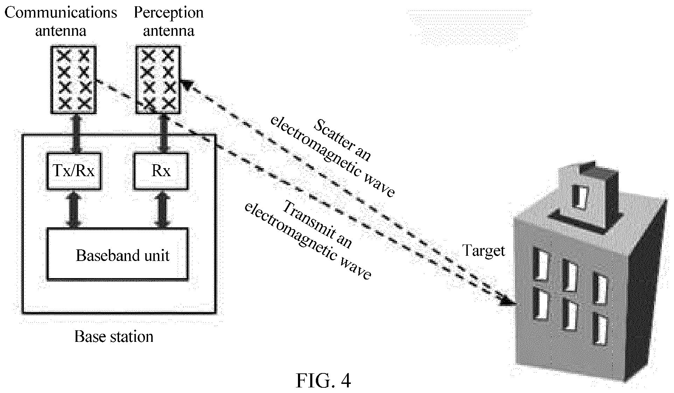

As shown in FIG. 4, the electromagnetic perception transmitting unit 301 and the communications antenna 305 may be deployed with the electromagnetic perception receiving unit 302 and the perception antenna 306 as a whole. In this deployment manner, an existing base station may be reused or extended without separate deployment, reducing deployment costs.

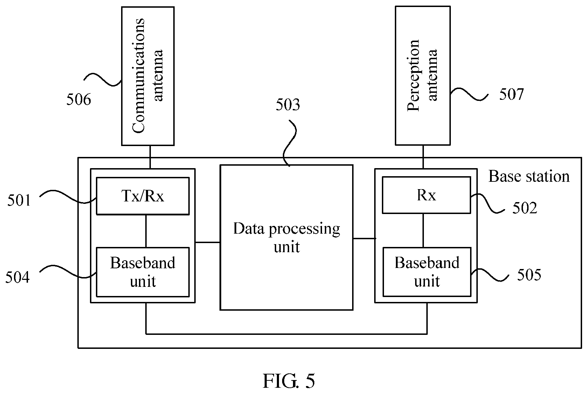

FIG. 5 is a schematic structural diagram of another base station according to an embodiment of the present invention. As shown in FIG. 5, the base station includes an electromagnetic perception transmitting unit 501, an electromagnetic perception receiving unit 502, a data processing unit 503, a baseband unit 504, a baseband unit 505, a communications antenna 506, and a perception antenna 507. A communications transmitting unit of the base station is reused as the electromagnetic perception transmitting unit 501, the electromagnetic perception transmitting unit 501 is connected to the communications antenna 506, and the electromagnetic perception transmitting unit 501 and the communications antenna 506 are used for mobile communication, and are further configured to send an electromagnetic perception signal to a to-be-perceived region. The electromagnetic perception signal is sent by using any one or a combination of a time domain resource, a frequency domain resource, and a space domain resource. Specifically, the baseband unit 504 directly generates an electromagnetic perception digital signal or receives an electromagnetic perception digital signal sent by the data processing unit 503, and performs code modulation on the electromagnetic perception digital signal. An electromagnetic perception digital signal obtained after the code modulation is transmitted to a cell-specific region by the electromagnetic perception transmitting unit 501 by using the communications antenna 506. The electromagnetic perception receiving unit 502 is connected to the perception antenna 507, and the electromagnetic perception receiving unit 502 and the perception antenna 507 are configured to receive an electromagnetic feedback signal of a detected object in the to-be-perceived region. Specifically, the baseband unit 505 receives an electromagnetic perception analog signal transmitted by the electromagnetic perception receiving unit 502, performs demodulation, decoding, and the like on the electromagnetic perception signal, and then sends an electromagnetic perception signal obtained after the processing to the data processing unit 503. The data processing unit 503 is configured to determine environment information of the to-be-perceived region based on the electromagnetic perception signal and the electromagnetic feedback signal.

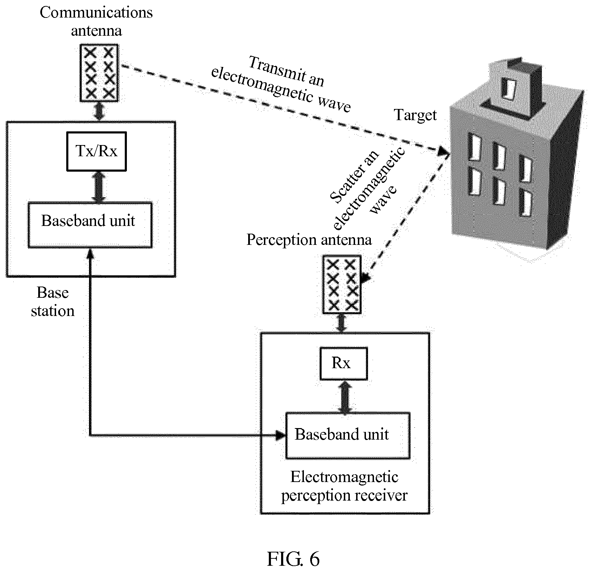

As shown in FIG. 6, the electromagnetic perception transmitting unit 501 and the communications antenna 506 may be separately deployed with the electromagnetic perception receiving unit 502 and the perception antenna 507. In this case, relative positions of a transmitting point of the electromagnetic perception signal and a receiving point of the electromagnetic perception signal are used as internal parameters for calculating the environment information. In addition, a plurality of electromagnetic perception receiving units 502 and perception antennas 507 may be deployed in this manner, and electromagnetic feedback signals from different positions are received, so that accuracy of the environment information can be improved during calculation of the environment information.

It should be understood that in the embodiments shown in FIG. 3 and FIG. 5, the data processing unit may be one data processing unit or a generic name of a plurality of processing elements. For example, the data processing unit may be a central processing unit (Central Processing Unit, CPU), an application-specific integrated circuit (Application-Specific Integrated Circuit, ASIC), or one or more integrated circuits configured to implement this embodiment of the present invention.

It should be further noted that the data processing units shown in FIG. 3 and FIG. 5 may be used as internal devices of the base station, or may be disposed on a device other than the base station. The external device is connected to the base station.

The base station in the embodiments shown in FIG. 3 and FIG. 5 further includes a memory. The memory may be one storage apparatus, or may be a generic name of a plurality of storage elements. The memory is configured to store executable program code, or parameters, data, and the like required by an access network management device for running. The memory 603 may include a random access memory (random access memory, RAM), or may include a non-volatile memory (non-volatile memory), such as a magnetic disk memory or a flash (Flash) memory. The data processing unit and the memory may be integrated into a processing circuit.

The base station may further include a communications bus, configured to connect elements of the base station. In addition to a data bus, the communications bus may include a power supply bus, a control bus, a status signal bus, and the like. However, for clarity of description, various types of buses are marked as the communications bus in the figure.

The following further describes working principles and specific operation steps of the embodiments of the present invention with reference to the accompanying drawings.

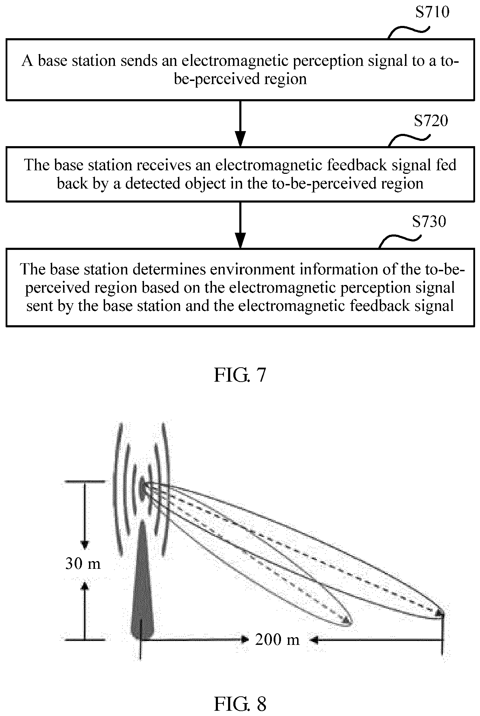

FIG. 7 is a flowchart of an environment perception method according to an embodiment of the present invention. As shown in FIG. 7, in this embodiment of the present invention, a base station sends an electromagnetic perception signal that can meet a perception requirement, and may calculate information such as a distance between a detected object in a to-be-perceived region and the base station, and a shape and a motion speed of the detected object based on information about the sent electromagnetic perception signal and a received electromagnetic feedback signal. Specifically, the method includes the following steps.

S710. The base station sends an electromagnetic perception signal to the to-be-perceived region, where the electromagnetic perception signal is sent by using any one or a combination of a time domain resource, a frequency domain resource, and a space domain resource.

That the electromagnetic perception signal is sent by using any one or a combination of a time domain resource, a frequency domain resource, and a space domain resource includes one or a combination of the following manners:

Manner 1: A dedicated waveform may be used for the electromagnetic perception signal or a mobile communication waveform may be reused for the electromagnetic perception signal provided that a perception requirement can be met.

Manner 2: Dedicated data may be used for data carried in the electromagnetic perception signal or mobile communication data may be reused for data carried in the electromagnetic perception signal provided that a perception requirement can be met.

Manner 3: When being sent by a communications transmitter of the base station, the electromagnetic perception signal may be sent by using a time-frequency blank resource (for example, a blank symbol or a blank subframe) of a communications system or reusing a non-blank resource. The blank resource is a resource that is not specified for a specific purpose in a standard, a resource that is not used in the prior art, or the like. The detected object in the to-be-perceived region may include a plurality of objects of different sizes that are spaced apart, for example, buildings, roads, plants, and terrains shown in FIG. 2. These objects may be static or mobile. A narrow beam is used to detect a static detected object, and a narrower beam indicates a higher resolution and more accurate information of the detected object. A wide beam is used to detect a mobile object, and the detected object may not be perceived if the beam is very narrow because the object is mobile.

It should be learned that in this embodiment of the present invention, the wide beam and the narrow beam are relative concepts. The wide beam has a large perception range, and the narrow beam has a high perception resolution. Accurate perception may be implemented based on features of the two beams.

Manner 4: When the base station sends the electromagnetic perception signal to the to-be-perceived region, a plurality of beams may be formed in space. The plurality of beams may include a wide beam and/or a narrow beam. The plurality of beams may be a same electromagnetic perception signal or different electromagnetic perception signals. In other words, one electromagnetic perception signal may be sent by using a plurality of beams, or beams may be corresponding to different electromagnetic perception signals, or some of a plurality of beams may be corresponding to a same electromagnetic perception signal.

Manner 5: A communication beam is reused for the electromagnetic perception signal. The communication beam that may be reused includes a common beam (for example, a broadcast beam), a dedicated beam (for example, a communication beam oriented towards a specific user), an electromagnetic perception dedicated beam oriented towards a specific to-be-detected region, and the like.

Manner 6: In a period of time, an electromagnetic perception signal may be sent for a plurality of times at intervals of a specified time. The plurality of times of sending in the period of time may be corresponding to different to-be-perceived regions to perceive the to-be-perceived regions through scanning, or the plurality of times of sending are corresponding to a same to-be-perceived region to implement energy accumulation and improve a detection capability such as a detection distance and a speed resolution. Electromagnetic perception signals sent in the period of time may be the same or different.

Accurate perception in a more complex scenario may be implemented by using any combination of the time domain resource, the frequency domain resource, and the space domain resource. For example, in a period of time, a dedicated electromagnetic perception signal may be sent for a plurality of times at intervals of a specified time. An electromagnetic perception signal is always sent by using a plurality of beams, and the plurality of beams include a wide beam and a narrow beam.

S720. The base station receives an electromagnetic feedback signal fed back by the detected object in the to-be-perceived region.

Electromagnetic feedback signals are transmitted, scattered, reflected, and the like after the electromagnetic perception signal reaches the detected object in the to-be-perceived region, and the base station may receive the electromagnetic feedback signals.

S730. The base station determines environment information of the to-be-perceived region based on the electromagnetic perception signal sent by the base station and the electromagnetic feedback signal.

The electromagnetic perception signal includes information such as transmit power, a bandwidth, a beam (a direction and a width), and a carrier (a modulation scheme and a phase) for sending the electromagnetic perception signal. The environment information of the to-be-perceived region may be calculated based on the information included in the electromagnetic perception signal and the received electromagnetic feedback signal.

It should be noted that the base station may calculate the environment information of the to-be-perceived region based on environment features corresponding to all detected objects included in the to-be-perceived region. Environment information of a coverage area of the base station may be calculated based on environment information of all to-be-perceived regions included in the coverage area of the base station. Further, a core network may calculate environment information of a management area of the core network based on environment information of coverage areas of all base stations managed by the core network, and so on.

Specifically, the base station performs imaging on the to-be-perceived region based on the electromagnetic perception signal and the electromagnetic feedback signal, and calculates a distance between the detected object in the to-be-perceived region and the base station (based on a distance resolution), a shape size of the detected object (based on an angle resolution), and a speed of the detected object (based on a speed resolution).

According to a radar principle, imaging is performed on the to-be-detected region, and the distance between the detected object and the base station is calculated by using a delay of the electromagnetic feedback signal fed back by the detected object; an antenna aperture may be increased through joint detection by using a plurality of deployed antennas, to further improve the angle resolution of the detected object, thereby obtaining an image of a relatively high two-dimensional resolution; a Doppler shift is calculated by using a Doppler effect caused by a mobile detected object, to obtain a radial speed of the mobile detected object; and a radar reflectivity cross-sectional area of the detected object is calculated based on strength of the electromagnetic feedback signal of the detected object, to obtain richer feature attributes of the detected object. Further processing is performed based on the foregoing information. Because detected objects of different materials have different radar scattering cross-sectional areas in different system parameters, signal estimation of the electromagnetic feedback signal that is fed back or a video and image processing technology is used to obtain a feature attribute of the detected object, to complete feature extraction and class identification. For a detected object that is detected for a long term, dynamic change information of the detected object may be obtained through change detection.

Further, radar is used to receive the electromagnetic feedback signal, estimate a scattering feature of the detected object, and obtain energy information of the electromagnetic feedback signal. A level/SNR of the position is obtained through calibration processing by using position measurement information of the detected object, and a level/SNR distribution diagram of the coverage area of the base station may be provided according to the principle. Specifically, level/SNR distribution information of the to-be-perceived region may be obtained by comprehensively considering levels/SNRs of positions of all detected objects in the to-be-perceived region, and level/SNR distribution information of the coverage area of the base station may be further obtained.

The level/SNR distribution information of the coverage area of the base station may be used for a self-organizing network (SON), to improve optimization efficiency and performance, and may also be used for radio resource management (RRM) such as real-time channel estimation and handover determining. More accurate level/SNR distribution information of the coverage area of the base station indicates a more proper self-organizing network and more proper radio resource management.

The environment information of the to-be-perceived region may be provided for a third-party application. For example, the environment information is used as guidance for wireless network planning and optimization, mobile object monitoring, building deformation monitoring, weather monitoring, and the like.

In addition, a distance resolution of continuous wave electromagnetic perception is related to a bandwidth and a propagation speed.

$$\Delta R = \frac{c}{2B} \qquad \text{Formula (1),}$$

where
c is a speed of light, and B is a signal bandwidth.

It may be determined from Formula (1) that a narrower signal bandwidth indicates a higher resolution.

Therefore, in this embodiment of the present invention, an electromagnetic perception signal of a relatively narrow signal bandwidth may be sent for detection, to improve the distance resolution.

For example, if a signal of a bandwidth of 100 MHz is used for detection, a distance resolution is:

$$\Delta R = \frac{c}{2B} = \frac{3 \times 10^8}{2 \times 100 \times 10^6} = 1.5 \, (m) \qquad \text{Formula (2)}$$

A resolution of 1.5 m is far greater than a resolution of data provided in an electronic map.

An electromagnetic perception angle resolution is related to an antenna aperture.

$$\Delta \theta = k \frac{\lambda}{L_a} = 0.886 \frac{3 \times 10^8}{f \cdot L_a} \qquad \text{Formula (3),}$$

where
k is a constant, $\lambda$ is a wavelength, La is an effective antenna aperture length, and f is a frequency.

It may be determined from Formula (3) that a lower frequency and a shorter effective antenna aperture indicate a higher electromagnetic perception angle resolution.

Therefore, in this embodiment of the present invention, an electromagnetic perception signal of a relatively narrow signal bandwidth may be sent for detection, and an antenna of a relatively short effective aperture may be used to receive the electromagnetic feedback signal, to improve a perception angle resolution, and improve precision of the environment information.

A radial speed resolution is related to a Doppler resolution, and a calculation formula of the radial speed resolution is as follows:

$$\Delta v_r = \frac{1}{2} \lambda \Delta f \qquad \text{Formula (4),}$$

where
$\lambda$ is a wavelength, and $\Delta f$ is a measured frequency resolution.

It may be determined from Formula (4) that a higher frequency resolution indicates a higher electromagnetic perception radial speed resolution.

Therefore, in this embodiment of the present invention, an electromagnetic perception signal of a relatively high frequency resolution may be sent for detection, to improve a perception radial speed resolution, and improve precision of the environment information.

In this embodiment of the present invention, based on a mobile communications base station and an electromagnetic perception technology, a mobile object such as a vehicle or an unmanned aerial vehicle can be monitored, imaging can be performed on an ambient environment of the communications base station, and an electromagnetic transmission feature can be described. In the electromagnetic perception system technology, a disadvantage that optical imaging is subject to the weather and the light can be overcome, and widespread mobile communications base stations and antenna systems can be used to provide a device and a site required for deploying a separate radar system.

The following further describes the embodiments of the present invention based on a more specific application scenario.

In an embodiment, environment information is obtained through electromagnetic wave perception, and the environment information is used to modify or enrich a 3D electronic map. Specifically, in this embodiment of the present invention, a macro base station or a small cell may be used to send an electromagnetic perception signal, and receive an electromagnetic feedback signal. Terrain information, ground object information, and vector information in a coverage area of the macro base station or the small cell are determined based on the information. The vector information is mainly used to describe plane distribution and a spatial relationship between an expressway, a street, and a river. A material of the ground object may be determined through electromagnetic wave perception, to supplement content of the 3D electronic map. The environment information obtained through electromagnetic perception is used to modify the 3D electronic map, to improve precision and shorten an update cycle. The following provides further description by using a more specific example.

Certainly, a terminal may perform environment perception by using an electromagnetic wave, and send perceived environment information to the macro base station or the small cell, to modify or enrich the 3D electronic map.

As shown in FIG. 8, a height of a base station is 30 m, and a radius of a cell is 200 m. Theoretically, 0.1° change of a tilt angle is corresponding to coverage change of approximately 3 m. However, the coverage change caused by the tilt angle adjustment cannot be identified on a 3D electronic map of a resolution of 5 m.

When a base station based on an electromagnetic perception system performs environment perception to modify the 3D electronic map, the base station sends an electromagnetic perception signal of a bandwidth of 100 MHz to an ambient to-be-perceived region. The base station receives an electromagnetic feedback signal that is fed back from the to-be-perceived region, calculates environment information of the to-be-perceived region based on information about the sent electromagnetic perception signal and the electromagnetic feedback signal, and may determine environment information of a coverage area of the base station based on environment information of all to-be-perceived regions in the coverage area of the base station. In addition, the bandwidth of the electromagnetic perception signal is 100 MHz, and therefore precision may reach 1.5 m. The 3D electronic map of the coverage area of the base station is modified based on the environment information of the coverage area of the base station. A coverage area of the base station after the 0.1° change of the tilt angle may be determined based on a modified 3D electronic map. Therefore, finer network planning and optimization can be implemented.

In addition, the 3D map that is modified by the base station through environment perception may be used to determine material information of a detected object. The material information of the detected object may reflect impact on electromagnetic wave transmission that is caused by a material of the detected object, so that more accurate electromagnetic transmission feature information, for example, a coverage capability, is obtained.

In another embodiment, a macro base station, a small cell, and an in-vehicle system may be used to perform environment perception, to determine a position and a motion speed of a mobile object such as an unmanned aerial vehicle or a car.

Specifically, the base station uses one or more beams to illuminate the to-be-perceived region. When entering the to-be-perceived region, the mobile object may be illuminated by an electromagnetic perception transmitting wave. In this case, the mobile object generates the electromagnetic feedback signal.

The base station receives the electromagnetic feedback signal of the detected object. When energy of the electromagnetic feedback signal is greater than a detection threshold, a receiver can correctly receive the electromagnetic feedback signal. The base station determines a direction of the detected object and a distance between the detected object and the base station based on an angle and an arrival time of the electromagnetic feedback signal and an angle and a transmitting time of the transmitted beam.

The base station may further detect the motion speed of the object based on a Doppler shift caused by the detected mobile object. For a rotor unmanned aerial vehicle, it may be determined, based on a Doppler shift feature triggered by a rotor wing, whether the object is an unmanned aerial vehicle and whether there is one or more unmanned aerial vehicles in a to-be-perceived region.

If the mobile object continuously passes by a plurality of to-be-perceived regions, and is separately detected by a plurality of beams, a motion feature of the object, for example, a motion trail and a motion speed of the object, may be calculated based on electromagnetic feedback signals from the plurality of to-be-perceived regions and an electromagnetic perception signal.

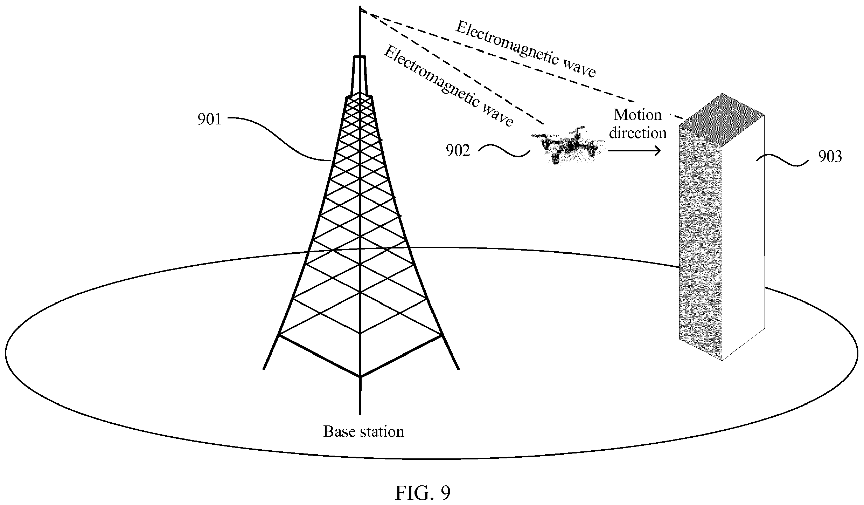

The following provides further description by using a more specific example. As shown in FIG. 9, a base station 901 determines a position and a motion trail of an unmanned aerial vehicle 902 through electromagnetic perception, and determines information about terrains and ground objects in a coverage area of the base station 901.

The unmanned aerial vehicle 902 may be managed and controlled based on the position and the motion trail of the unmanned aerial vehicle, and the information about terrains and ground objects, including prohibited area control and unmanned aerial vehicle capture. In addition, the data may also be used for unmanned aerial vehicle navigation and unmanned driving assistance.

For example, the base station 901 may send an instruction to the unmanned aerial vehicle 902. The instruction is used to indicate a flight trail of the unmanned aerial vehicle, and an obstacle 903 can be avoided along the trail.

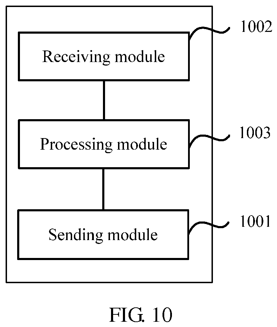

FIG. 10 is a schematic structural diagram of an environment perception apparatus according to an embodiment of the present invention. As shown in FIG. 10, the apparatus includes:

> a sending module 1001, configured to send an electromagnetic perception signal to a to-be-perceived region, where the electromagnetic perception signal is sent by using any one or a combination of a time domain resource, a frequency domain resource, and a space domain resource;
> a receiving module 1002, configured to receive an electromagnetic feedback signal of a detected object in the to-be-perceived region; and
> a processing module 1003, configured to determine, by the base station, environment information of the to-be-perceived region based on the electromagnetic perception signal and the electromagnetic feedback signal.

That the electromagnetic perception signal is sent by using any one or a combination of a time domain resource, a frequency domain resource, and a space domain resource includes one or a combination of the following manners:

> the electromagnetic perception signal is sent by using a time-frequency blank resource of a communications system or reusing a non-blank resource; or
> the electromagnetic perception signal is sent by using a dedicated waveform or reusing a communication waveform; or
> the electromagnetic perception signal is sent by using dedicated data or reusing communication data; or
> the electromagnetic perception signal is sent by using a dedicated beam or reusing a communication beam.

In addition, that the electromagnetic perception signal is sent by using any one or a combination of a time domain resource, a frequency domain resource, and a space domain resource includes one or a combination of the following manners:

> one or more electromagnetic perception signals are separately sent by using a plurality of beams in space, where the plurality of beams include a wide beam and/or a narrow beam; or
> one or more electromagnetic perception signals are sent for a plurality of times within a preset period, where the plurality of times of sending one or more electromagnetic perception signals are corresponding to different to-be-perceived regions, or the plurality of times of sending one or more electromagnetic perception signals are corresponding to a same to-be-perceived region.

The processing module 1003 is further configured to: perform imaging on the to-be-perceived region based on the electromagnetic perception signal and the electromagnetic feedback signal, and calculate one or more of the following environment information:

a distance between the detected object in the to-be-perceived region and the base station, a shape of the detected object, a speed of the detected object, a material of the detected object, a motion feature of the detected object, and a Doppler shift feature of the electromagnetic feedback signal.

In an embodiment, the processing module 1003 is further configured to: calculate a level or a signal-to-noise ratio SNR of a position of the detected object in the to-be-perceived region, and determine level or SNR distribution corresponding to the to-be-perceived region; and

determine level or SNR distribution of a coverage area of the base station based on level or SNR distribution of one or more to-be-perceived regions in the coverage area of the base station.

The processing module 1003 is further configured to use the level or SNR distribution of the coverage area of the base station for a self-organizing network SON or radio resource management RRM.

In another embodiment, the processing module 1003 is further configured to determine an unmanned aerial vehicle in the to-be-perceived region based on the Doppler shift feature of the electromagnetic feedback signal.

In still another embodiment, the processing module 1003 is further configured to: modify a 3D electronic map of the to-be-perceived region based on the environment information of the to-be-perceived region, or add material information of the detected object in the to-be-perceived region.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

A person of ordinary skill in the art may understand that all or some of the steps in the foregoing method of the embodiments may be implemented by a program instructing a data processing unit. The program may be stored in a computer readable storage medium. The storage medium may be a non-transitory (non-transitory) medium, such as a random access memory, a read-only memory, a flash memory, a hard disk, a solid state drive, a magnetic tape (magnetic tape), a floppy disk (floppy disk), an optical disc (optical disc), or any combination thereof.

The foregoing descriptions are merely examples of implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. An environment perception method, comprising:

    sending, by a base station, an electromagnetic perception signal to a to-be-perceived region, wherein the electromagnetic perception signal is sent by using any one or a combination of a time domain resource, a frequency domain resource, and a space domain resource;
    receiving, by the base station, an electromagnetic feedback signal of a detected object in the to-be-perceived region; and
    determining, by the base station, environment information of the to-be-perceived region based on the electromagnetic perception signal and the electromagnetic feedback signal.

2. The method according to claim 1, wherein that the electromagnetic perception signal is sent by using any one or a combination of a time domain resource, a frequency domain resource, and a space domain resource comprises one or a combination of the following manners:

    the electromagnetic perception signal is sent by using a time-frequency blank resource of a communications system or reusing a non-blank resource; or
    the electromagnetic perception signal is sent by using a dedicated waveform or reusing a communication waveform; or
    the electromagnetic perception signal is sent by using dedicated data or reusing communication data; or
    the electromagnetic perception signal is sent by using a dedicated beam or reusing a communication beam.

3. The method according to claim 1 or 2, wherein that the electromagnetic perception signal is sent by using any one or a combination of a time domain resource, a frequency domain resource, and a space domain resource comprises one or a combination of the following manners:

    one or more electromagnetic perception signals are separately sent by using a plurality of beams in space, wherein the plurality of beams comprise a wide beam and/or a narrow beam; or
    one or more electromagnetic perception signals are sent for a plurality of times within a preset period, wherein the plurality of times of sending one or more electromagnetic perception signals are corresponding to different to-be-perceived regions, or the plurality of times of sending one or more electromagnetic perception signals are corresponding to a same to-be-perceived region.

4. The method according to any one of claims 1 to 3, wherein the determining, by the base station, environment information of the to-be-perceived region based on the electromagnetic perception signal and the electromagnetic feedback signal comprises:

performing, by the base station, imaging on the to-be-perceived region based on the electromagnetic perception signal and the electromagnetic feedback signal, and calculating one or more of the following environment information: a distance between the detected object in the to-be-perceived region and the base station, a shape of the detected object, a speed of the detected object, a material of the detected object, a motion feature of the detected object, and a Doppler shift feature of the electromagnetic feedback signal.

5. The method according to claim 4, further comprising:

calculating a level or a signal-to-noise ratio SNR of a position of the detected object in the to-be-perceived region, and determining level or SNR distribution corresponding to the to-be-perceived region; and determining level or SNR distribution of a coverage area of the base station based on level or SNR distribution of one or more to-be-perceived regions in the coverage area of the base station.

6. The method according to claim 5, further comprising:
using the level or SNR distribution of the coverage area of the base station for a self-organizing network SON or radio resource management RRM.

7. The method according to claim 4, further comprising:
determining, based on the Doppler shift feature of the electromagnetic feedback signal, whether the detected object in the to-be-perceived region is an unmanned aerial vehicle.

8. The method according to claim 4, further comprising:
modifying a 3D electronic map of the to-be-perceived region based on the environment information of the to-be-perceived region, or adding material information of the detected object in the to-be-perceived region.

9. Abase station, comprising:

an electromagnetic perception transmitting unit, configured to send an electromagnetic perception signal to a to-be-perceived region, wherein the electromagnetic perception signal is sent by using any one or a combination of a time domain resource, a frequency domain resource, and a space domain resource; an electromagnetic perception receiving unit, configured to receive an electromagnetic feedback signal of a detected object in the to-be-perceived region; and a data processing unit, configured to determine environment information of the to-be-perceived region based on the electromagnetic perception signal and the electromagnetic feedback signal.

10. The base station according to claim 9, wherein a communications transmitting unit of the base station is reused as the electromagnetic perception transmitting unit.

11. The base station according to claim 10, wherein the electromagnetic perception receiving unit is independently deployed, or a communications receiving unit of the base station is reused as the electromagnetic perception receiving unit.

12. The base station according to claim 9 or 10, wherein the electromagnetic perception transmitting unit is connected to the electromagnetic perception receiving unit by using a physical interface.

13. The base station according to any one of claims 9 to 12, wherein that the electromagnetic perception signal is sent by using any one or a combination of a time domain resource, a frequency domain resource, and a space domain resource comprises one or a combination of the following manners:

the electromagnetic perception signal is sent by using a time-frequency blank resource of a communications system or reusing a non-blank resource; or the electromagnetic perception signal is sent by using a dedicated waveform or reusing a communication waveform; or the electromagnetic perception signal is sent by using dedicated data or reusing communication data; or the electromagnetic perception signal is sent by using a dedicated beam or reusing a communication beam.

14. The base station according to any one of claims 9 to 13, wherein that the electromagnetic perception signal is sent by using any one or a combination of a time domain resource, a frequency domain resource, and a space domain resource comprises one or a combination of the following manners:

one or more electromagnetic perception signals are separately sent by using a plurality of beams in space, wherein the plurality of beams comprise a wide beam and/or a narrow beam; or
one or more electromagnetic perception signals are sent for a plurality of times within a preset period, wherein the plurality of times of sending one or more electromagnetic perception signals are corresponding to different to-be-perceived regions, or the plurality of times of sending one or more electromagnetic perception signals are corresponding to a same to-be-perceived region.

15. The base station according to any one of claims 9 to 14, wherein the data processing unit is further configured to:
perform, by the base station, imaging on the to-be-perceived region based on the electromagnetic perception signal and the electromagnetic feedback signal, and calculate one or more of the following environment information:
a distance between the detected object in the to-be-perceived region and the base station, a shape of the detected object, a speed of the detected object, a material of the detected object, a motion feature of the detected object, and a Doppler shift feature of the electromagnetic feedback signal.

16. The base station according to claim 15, further comprising:

calculating a level or a signal-to-noise ratio SNR of a position of the detected object in the to-be-perceived region, and determining level or SNR distribution corresponding to the to-be-perceived region; and
determining level or SNR distribution of a coverage area of the base station based on level or SNR distribution of one or more to-be-perceived regions in the coverage area of the base station.

17. The base station according to claim 16, wherein the data processing unit is further configured to:
use the level or SNR distribution of the coverage area of the base station for a self-organizing network SON or radio resource management RRM.

18. The base station according to claim 15, wherein the data processing unit is further configured to determine an unmanned aerial vehicle in the to-be-perceived region based on the Doppler shift feature of the electromagnetic feedback signal.

19. The base station according to claim 15, wherein the data processing unit is further configured to: modify a 3D electronic map of the to-be-perceived region based on the environment information of the to-be-perceived region, or add material information of the detected object in the to-be-perceived region.

Terrain

Core network device

MeNB

Plant

Coverage area of
the base station

Building   Unmanned aerial vehicle

SeNB

SeNB

Road

Vehicle

Terminal

River

FIG. 1

EP 3 503 490 A1

FIG. 2

FIG. 3

FIG. 4

FIG. 5

FIG. 6

S710

A base station sends an electromagnetic perception signal to a to-be-perceived region

S720

The base station receives an electromagnetic feedback signal fed back by a detected object in the to-be-perceived region

S730

The base station determines environment information of the to-be-perceived region based on the electromagnetic perception signal sent by the base station and the electromagnetic feedback signal

FIG. 7

30 m

200 m

FIG. 8

FIG. 9

EP 3 503 490 A1

Receiving module — 1002

Processing module — 1003

Sending module — 1001

FIG. 10

# INTERNATIONAL SEARCH REPORT

International application No.

PCT/CN2016/100596

**A. CLASSIFICATION OF SUBJECT MATTER**

H04L 29/02 (2006.01) i; G01S 13/02 (2006.01) i

According to International Patent Classification (IPC) or to both national classification and IPC

**B. FIELDS SEARCHED**

Minimum documentation searched (classification system followed by classification symbols)

H04L H04W H04B G01S

Documentation searched other than minimum documentation to the extent that such documents are included in the fields searched

Electronic data base consulted during the international search (name of data base and, where practicable, search terms used)

CNABS, CNTXT, VEN, CNKI: 基站, 雷达, 感知, 电磁, 电平, 信噪比, 分布, 环境, 探测, 区域, radar, electromagnetic, sense, echo, reflect, detect, object, area, transmit, emit, receive, level, SNR, environment

**C. DOCUMENTS CONSIDERED TO BE RELEVANT**

| Category* | Citation of document, with indication, where appropriate, of the relevant passages | Relevant to claim No. |
|---|---|---|
| X | CN 105717504 A (WANG, Zongbo), 29 June 2016 (29.06.2016), description, paragraphs 0086-0090, 0104-0107, 0119-0120 and 0128-0132 | 1-19 |
| A | US 5502444 A (MANDEX INC.), 26 March 1996 (26.03.1996), the whole description | 1-19 |
| A | CN 202019371 U (SHANDONG UNIVERSITY OF FINANCE), 26 October 2011 (26.10.2011), the whole description | 1-19 |

☐ Further documents are listed in the continuation of Box C. ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 17 February 2017 | 15 March 2017 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | LING, Lin Telephone No. (86-10) 62411446 |

Form PCT/ISA/210 (second sheet) (July 2009)

## INTERNATIONAL SEARCH REPORT
### Information on patent family members

| International application No. |
| --- |
| PCT/CN2016/100596 |

| Patent Documents referred in the Report | Publication Date | Patent Family | Publication Date |
| --- | --- | --- | --- |
| CN 105717504 A | 29 June 2016 | None | |
| US 5502444 A | 26 March 1996 | None | |
| CN 202019371 U | 26 October 2011 | None | |

Form PCT/ISA/210 (patent family annex) (July 2009)